# EUROPEAN PATENT APPLICATION

(11) **EP 3 037 477 A1**
(43) Date of publication of application: **29.06.2016**
(21) Application number: 14848499.1
(22) Date of filing: 26.09.2014
(51) Int. Cl.: C08L 75/04, B32B 27/40, C08K 5/3412, C08L 67/02, C08L 71/02, C09J 11/06, C09J 175/04

(54) **POLYISOCYANATE MIXTURE, POLYOL MIXTURE, ADHESIVE, AND LAMINATED FILM**

(30) Priority: 30.09.2013 JP 2013203978
(71) Applicant: DIC Corporation, Tokyo 174-8520 (JP)
(72) Inventor: ARAI Masamitsu, Tokyo 174-8520 (JP); SHIMAMURA Kenichi, Tokyo 174-8520 (JP); SUZUKI Shinya, Tokyo 174-8520 (JP); OHARA Shin-ichi, Tokyo 174-8520 (JP); TAMAOKA Takashi, Tokyo 174-8520 (JP)
(74) Representative: Beckmann, Claus
(86) International application number: PCT/JP2014/075690
(87) International publication number: WO 2015/046453

(57) **Abstract**

Provided are an adhesive, a polyisocyanate component and a polyol component which are to be used in the adhesive, and a laminated film. The adhesive has a small elution amount of a low-molecular chemical substance when being used as a packaging material. The laminated film has a small amount of the low-molecular chemical substance eluted into the contents during packaging. The adhesive contains polyisocyanate (A), an alicyclic amide compound (B), and polyol (C) as essential components. When the adhesive is used, a polyisocyanate mixture obtained by mixing the polyisocyanate (A) and the alicyclic amide compound (B) in advance or a polyol mixture obtained by mixing the polyol (C) and the alicyclic amide compound (B) in advance is used as one component of a two-liquid adhesive.

## Description

### Technical Field

The present invention relates to a urethane-based adhesive, and a polyisocyanate mixture and a polyol mixture which are used in the urethane-based adhesive, and to a laminated film obtained by laminating various films with the adhesive. More particularly, the present invention relates to an adhesive for lamination, which is to be used in the case of preparing a composite film, which is mainly used as a packaging material for food, medicine, detergent or the like, by laminating various plastic films, metal-deposited films, aluminum foils or the like.

### Background Art

As a food packaging material or a packaging material for medicine or daily goods, a multi-layer film obtained by so-called dry lamination is widely used from the viewpoint that any film in the multi-layer film can be selectively combined according to the required characteristics of each application. In the dry lamination, after the surface of a film base material is coated with an adhesive, a solvent is removed by evaporation and drying, and another material is heated and laminated thereon by press bonding.

As an adhesive used in such dry lamination, a two-liquid type polyurethane-based adhesive is mainly used. The two-liquid type polyurethane-based adhesive mainly includes a polyol component having a hydroxyl group at a polymer terminal, as a main component, and uses polyisocyanate as a curing agent. Here, polyester polyol or polyester polyurethane polyol is used as the polyol component, and various monomeric polyisocyanates such as tolylene diisocyanate (TDI), diphenylmethane diisocyanate (MDI), and isophorone diisocyanate (IPDI) are used as the polyisocyanate. The polyisocyanates are used from the viewpoint that the curing agent itself functions as a reactive diluent.

However, a low-molecular chemical substance such as the monomeric polyisocyanate or an amine compound resulting from the monomeric polyisocyanate easily elutes to the surface of the multi-layer film when being used in a packaging material. In the food packaging field, this viewpoint has been a particularly serious problem.

Especially, in the case where an aromatic isocyanate monomer is used as the curing agent, toxic problems in an aromatic amine (abbreviated to "PAA below) which is a derivative of the aromatic isocyanate monomer have been pointed out in recent years. In food packaging regulations in Europe, with respect to the amount of PAA eluted from packaging into food contents, a very strict allowable upper limit value of 10 µg/kg-food after aging is performed at 40°C for 5 days has been set.
Such flow of regulations strengthening for food packaging in Europe is in a situation of a high probability of spreading across the whole world.

Thus, an adhesive to which a low-molecular compound having an effect of capturing the generated PAA, for example, an epoxidized polymer additive or a low-molecular chemical substance which contains an acid anhydride group is added has been proposed (see PTL 1 below).
However, the PAA generation mainly causes by reaction of an isocyanate monomer, which is transitioned in food contents, with moisture in the food, therefore, even when a capturing agent is added to a film coated with the adhesive, an effect obtained with the addition is low.

### Citation List

### Patent Literature

[PTL 1] JP-T-2010-513577

### Summary of Invention

### Technical Problem

Thus, to solve the above problem, an object of the present invention is to provide an adhesive having a small elution amount of a low-molecular chemical substance when being used as a packaging material, a polyisocyanate component and a polyol component which are to be used in the adhesive, and a laminated film having a small amount of the low-molecular chemical substance eluted into the contents during packaging. Solution to Problem

The inventors have performed close examination in order to solve the above problems, and as a result, found out that, in the case where an alicyclic amide compound is mixed to either one component of a polyisocyanate/polyol curing adhesive or the alicyclic amide compound is mixed as a third component during coating, elution of a harmful low-molecular chemical substance, represented by an aromatic amine, to the contents in a laminated package, can be effectively suppressed, thereby completing the present invention.

That is, the present invention relates to a polyisocyanate mixture which contains polyisocyanate (A) and an alicyclic amide compound (B) as essential components.

Further, the present invention relates to a polyol mixture which contains polyol (C) and the alicyclic amide compound (B) as essential components.

Further, the present invention relates to an adhesive which contains the polyisocyanate (A), the alicyclic amide compound (B), and the polyol (C) as essential components.

Further, the present invention relates to a laminated film obtained in such a manner that after a first plastic film is coated with the adhesive, a second plastic film is laminated on the coated surface, and the adhesive layer is cured.

### Advantageous Effects of Invention

According to the present invention, it is possible to provide an adhesive having a small elution amount of a low-molecular chemical substance when being used as a packaging material, a polyisocyanate component and a polyol component used in the adhesive, and a laminated film having a small amount of the low-molecular chemical substance eluted into the contents during packaging.

### Description of Embodiments

As described above, with respect to an adhesive of the present invention, an alicyclic amide compound (B) is used with a two-liquid adhesive which includes polyisocyanate (A) and polyol (C) as main components, and thus, it is possible to effectively suppress the low-molecular chemical substance from eluting into the contents when being used in a laminated film for packaging.

Here, as a mode of use of the alicyclic amide compound (B), the alicyclic amide compound (B) may be mixed in this state, along with the polyisocyanate (A) and the polyol (C) when the adhesive is used. However, from the viewpoint of excellent workability during coating with the adhesive, a form of a polyisocyanate mixture or a form of a polyol mixture is preferably used. The polyisocyanate mixture is obtained by mixing the polyisocyanate (A) and the alicyclic amide compound (B) in advance. The polyol mixture has the polyol (C) and the alicyclic amide compound (B) as essential components.

Examples of the polyisocyanate (A) used herein include aromatic polyisocyanate such as tolylene diisocyanate, xylylene diisocyanate, diphenylmethane diisocyanate, 1,5-naphthalene diisocyanate, and triphenylmethane triisocyanate; aliphatic polyisocyanate such as 1,6-hexamethylene diisocyanate, isophorone diisocyanate, 4,4'-methylenebis(cyclohexyl isocyanate), lysine diisocyanate, trimethylhexamethylene diisocyanate, and 1,3-(isocyanatomethyl)cyclohexane; aromatic or aliphatic polyisocyanate of the above substances, polyisocyanate which is a reaction product with the polyol (C) (which will be described later), a biuret product of aromatic or aliphatic polyisocyanate of the above substances, or a derivative (modified material) of polyisocyanate, such as an isocyanurate product of aromatic or aliphatic polyisocyanate of the above substances, and an adduct product obtained by performing trimethylolpropane modification on an aromatic or aliphatic polyisocyanate of the above substances.

Among these substances, the aromatic polyisocyanate, and the polyisocyanate which is a reaction product of aromatic polyisocyanate and the polyol (C) (which will be described later) are preferable since a reaction rate with the polyol (C) is high, the aging period, which corresponds to a process of curing the adhesive after laminating, can be reduced, and the thermal resistance and strength after curing of the adhesive are excellent. It is possible to adjust the adhesive performance in accordance with an application by selection of the polyol (C) which is caused to react with the aromatic polyisocyanate.

Here, with respect to a reaction ratio of the aromatic polyisocyanate and the polyol (C) (which will be described later), it is preferred that an equivalent ratio [isocyanate/hydroxyl group] of isocyanate in the aromatic polyisocyanate and a hydroxyl group in the polyol (C) is in a range of 1.5 to 5.0, since viscosity of the adhesive is in an appropriate range, thereby causing good coating properties.

In the case where the aromatic polyisocyanate and the like is used as the polyisocyanate (A) or a raw material thereof, there is a concern that aromatic amine (PAA), which is a toxic material, elutes into food contents. However, in the present invention, it is possible to effectively suppress such elution of PAA. Thus, the point that, the PAA elution amount after aging (at 40°C for 5 days) can be less than 10 µg/kg-food which is the European regulation value, even when aromatic isocyanate is used in the food packaging field, is noteworthy.

Among the above mentioned polyisocyanates (A), for in a solventless adhesive for soft packaging, a polyisocyanate obtained by reaction of aromatic polyisocyanate with polyether polyol or urethane bond-containing polyether polyol is preferable in that the reaction products can impart appropriate flexibility to a cured product. Specifically, among the polyisocyanates as the reaction products, that having a percentage of the isocyanate content, which is obtained using a titration method (with di-n-butylamine), of 5% to 20% by mass is preferable, since an appropriate resin viscosity is obtained, thereby providing excellent coating properties.

On the other hands, for a solventless adhesive for a hard base material, polyisocyanate obtained by causing aromatic polyisocyanate and polyester polyol to react with each other; and polyisocyanate obtained by causing aromatic polyisocyanate to react with a mixture of polyester polyol and polyether polyol are preferable in that the adhesive strength is excellent. Specifically, the above-described substances having a percentage of the isocyanate content, which is obtained by using the titration method (with di-n-butylamine), of 5% to 20% by mass is preferable, since an appropriate resin viscosity is also obtained, thereby providing the excellent coating properties.

In addition, as a solvent type adhesive for soft packaging, polyisocyanate obtained by causing aromatic polyisocyanate to react with polyether polyol or urethane bond-containing polyether polyol is preferable in that the polyisocyanate can impart appropriate flexibility to a cured product. Specifically, the polyisocyanate having a percentage of the isocyanate content, which is obtained by using the titration method (with di-n-butylamine), of 2% to 5% by mass is preferable, since an appropriate resin viscosity is obtained, thereby providing the excellent coating properties. For the solventless adhesive for the hard base material, an dduct which is a trimethylolpropane modified product of aromatic polyisocyanate is preferably used from the viewpoint of curing properties. Specifically, the adduct having a percentage of the isocyanate content, which is obtained by using the titration method (with di-n-butylamine) , of 5% to 25% by mass is preferable since the curing properties of the adhesive is dramatically improved.

Next, examples of the polyol (C) used in the present invention include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, and 1,4-cyclohexanedimethanol; bisphenols such as bisphenol A, bisphenol F, hydrogenated bisphenol A, and hydrogenated bisphenol F; dimer diol; polyether polyol obtained by adding and polymerizing alkylene oxide under the presence of a polymerization initiator such as glycol, or urethane bond-containing polyether polyol obtained by causing polyether polyol to have a high molecular weight using the aromatic or aliphatic polyisocyanate; polyester polyol which is a reactant with polyester and polyhydric alcohol; polyester polyol obtained by causing bifunctional polyol to react with polyvalent carboxylic acid; urethane bond-containing polyester polyether polyol obtained by causing polyester polyol and the polyether polyol to react with aromatic or aliphatic polyisocyanate; polyester polyurethane polyol obtained by causing the polyester polyol to have a high molecular weight using aromatic or aliphatic polyisocyanate; and a mixture of polyester polyol and polyether polyol. Examples of the alkylene oxide include ethylene oxide, propylene oxide, butylene oxide, styrene oxide, epichlorohydrin, tetrahydrofuran, and cyclohexylene. The above-described polyester is obtained by a ring-opening polymerization reaction of a cyclic ester compound such as propiolactone, butyrolactone, ε-caprolactone, δ-valerolactone, and β-methyl-δ-valerolactone. Examples of the polyhydric alcohol include glycol, glycerin, trimethylolpropane, and pentaerythritol. Examples of the bifunctional polyol include glycol, dimer diol, and bisphenol.

Here, examples of the polyvalent carboxylic acid include succinic acid, adipic acid, azelaic acid, sebacic acid, dodecane dicarboxylic acid, maleic anhydride, fumaric acid, 1,3-cyclopentane dicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyl dicarboxylic acid, 1,2-bis(phenoxy)ethane-p,p'-dicarboxylic acid, and anhydride or ester forming derivative of the above dicarboxylic acid; p-hydroxybenzoic acid, p- (2-hydroxyethoxy) benzoic acid, and ester forming derivative of the above dihydroxycarboxylic acid, and polybasic acids such as dimer acid.

As the polyester polyol obtained by causing bifunctional polyol to react with polyvalent carboxylic acid, polyhydric alcohol of tri- or higher functional groups, such as glycerin, trimethylolpropane, and pentaerythritol may be used together as an alcohol component.

In the present invention, particularly with respect to the solventless adhesive among these substances, for soft packaging, polyether polyol or urethane bond-containing polyether polyol is preferable from the viewpoint of allowing appropriate flexibility to be applied to a cured product, and for hard base material, polyester polyol and urethane bond-containing polyester polyether polyol are preferable from the viewpoint of excellent adhesive strength.

Here, it is preferred that polyether polyol, urethane bond-containing polyether polyol, polyester polyol, and urethane bond-containing polyester polyether polyol, which are used in the case of the solventless adhesive for soft packaging or the hard base material, have a hydroxyl value being in a range of 50 to 300 mgKOH/g, from the viewpoint of excellent wettability during coating.

With respect to the solvent type adhesive, for the soft packaging, polyether polyol, urethane bond-containing polyester polyether polyol, and a mixture of polyester polyol and polyether polyol are preferable from the viewpoint of allowing appropriate flexibility to be applied to a cured product. In this case, the hydroxyl value is preferably in a range of 3 to 50 mgKOH/g, from the viewpoint of excellent wettability to the base material.

For the hard base material of the solvent type adhesive, polyester polyol or polyester polyurethane polyol is preferable from the viewpoint of excellent adhesive strength. Specifically, it is preferred that polyester polyol or polyester polyurethane polyol for such a hard base material has a hydroxyl value being in a range of 3 to 50 mgKOH/g, from the viewpoint of excellent balance between the wettability to the base material and the adhesive strength.

Next, examples of the alicyclic amide compound (B) used in the present invention include δ-valerolactam, ε-caprolactam, ω-enantholactam, η-capryllactam, and β-propiolactam. Among these substances, ε-caprolactam is preferable since ε-caprolactam has an excellent effect in reducing an elution amount of a low-molecular chemical substance.

As described above, in the present invention, it is preferred that the alicyclic amide compound (B) is used as a polyisocyanate mixture (X) obtained by mixing the polyisocyanate (A) and the alicyclic amide compound (B) in advance, or is used as a polyol mixture (Y) containing the polyol (C) and the alicyclic amide compound (B) as the essential components. Particularly, the latter, that is, the polyol mixture containing the polyol (C) and the alicyclic amide compound (B) as the essential components is preferable from the viewpoint of excellent storage stability of the polyol mixture.

Here, with respect to the polyisocyanate mixture (X), the alicyclic amide compound (B) is preferably mixed so as to be in a range of 0.1 to 5 parts by mass per 100 parts by mass of the polyisocyanate (A) from the viewpoint of being excellent in adhesive strength after curing. The polyisocyanate (A) and the alicyclic amide compound (B) are preferably mixed at a temperature condition of 40°C to 50°C, from the viewpoint of productivity.

Next, with respect to the polyol mixture (Y), the alicyclic amide compound (B) is preferably mixed so as to be in a range of 0.1 to 5 parts by mass per 100 parts by mass of the polyol (C), from the viewpoint of a stable pot life, excellent coating workability, and excellent adhesive performance after curing. The polyol (C) and the alicyclic amide compound (B) are preferably mixed under a temperature condition of 40°C to 50°C from the viewpoint of productivity.

With respect to the adhesive in the present invention, the equivalent ratio [isocyanate group/hydroxyl group] of the isocyanate group in the polyisocyanate (A) and the hydroxyl group in the polyol resin (B) is preferably 1.0 to 5.0 from the viewpoint of excellent adhesive strength or excellent thermal resistance during heat sealing. Particularly, the equivalent ratio is preferably in a range of 1.5 to 3.5 from the viewpoint of significantly improved performance thereof.

Thus, with respect to the ratio of the polyisocyanate mixture (X) and the polyol (C) to be used, it is preferred that the equivalent ratio [isocyanate group/hydroxyl group] of the isocyanate group in the polyol mixture (X) and the hydroxyl group in the polyol (C) is 1.0 to 5.0, and particularly 1.5 to 3.5.

With respect to the ratio of the polyol mixture (Y) and the polyisocyanate (A), it is preferred that the equivalent ratio [isocyanate group/hydroxyl group] of the hydroxyl group in the polyol mixture (Y) and the isocyanate group in the polyol resin (A) is 1.0 to 5.0, and particularly 1.5 to 3.5.

As the adhesive of the present invention, a solvent type adhesive or a solventless adhesive may be used. Examples of a solvent which may be used as the solvent type adhesive include methanol, ethanol, isopropyl alcohol, methyl acetate, ethyl acetate, n-butyl acetate, acetone, methyl ethyl ketone (MEK), cyclohexanone, toluol, xylol, n-hexane, and cyclohexane. Among these substances, ethyl acetate or methyl ethyl ketone (MEK) is preferable from the viewpoint of solubility, and ethyl acetate is particularly preferable. The amount of the organic solvent to be used is preferably in a range of 20% to 50% by mass from the viewpoint of viscosity.

The adhesive in the present invention may be used along with a pigment if necessary. The pigment usable in this case is not particularly limited. Examples of the pigment usable in this case include an extender pigment, an organic pigment or an inorganic pigment such as a white pigment, a black pigment, a gray pigment, a red pigment, a brown pigment, a green pigment, a blue pigment, a metal powder pigment, a luminescent pigment, a pearl color pigment, and a plastic pigment, which have been disclosed in Paint Raw Materials Handbook 1970 edition of the Annual book (edited by Japan Paint Manufacturers Association). As a specific example of the above colorant, various substances are exemplified. Examples of the organic pigment include various insoluble azo pigments such as Benzidine yellow, Hansa Yellow, and Rekiddo 4R; and various soluble azo pigments such as Rekiddo C, Carmine 6B, and Bordeaux 10.

Further, the examples of the organic pigment include various (copper) phthalocyanine pigments such as phthalocyanine blue and phthalocyanine green; various chlorine-dyed lakes such as a rhodamine lake and a methyl violet lake; various mordant dye-based pigments such as quinoline lake and Fast Sky Blue; various vat dye-based pigments such as an anthraquinone-based pigment, a thioindigo-based pigment, and a perinone-based pigment; various quinacridone-based pigments such as Shin Cassia Red B; various dioxazine-based pigments such as dioxazine violet; various condensed azo pigments such as Chromophtal; and aniline black.

Examples of the inorganic pigment include various chromates such as Chrome yellow, zinc chromate, and molybdate orange; various ferrocyan compounds such as dark blue; various metal oxides such as titanium oxide, zinc white, Mapico yellow, iron oxide, red iron oxide, chrome oxide green, and zirconium oxide; various sulfides or selenides such as cadmium yellow, cadmium red, and mercury sulfide.

Further, the examples of the inorganic pigment include various sulfates such as Barium sulfate, and lead sulfate; various silicates such as calcium silicate and ultramarine blue; various carbonates such as calcium carbonate and magnesium carbonate; various phosphates such as cobalt violet and manganese violet; various metal powder pigments such as aluminum powders, gold powders, silver powders, copper powders, bronze powders, and brass powders; a flake pigment of the above-described metal substances, and a mica·-flake pigment; a mica·flake pigment having a form of coating with metal oxide, a pearl pigment, and a metallic pigment such as a micaceous iron oxide pigment; and graphite and carbon black.

Examples of the extender pigment include precipitated barium sulfate, powder thereof, precipitated calcium carbonate, calcium bicarbonate, white marble, alumina white, silica, hydrous fine silica (white carbon), ultra-fine anhydrous silica (aerosil), silica sand, talc, precipitated magnesium carbonate, bentonite, clay, kaolin, and loess.

Examples of the plastic pigment include "Grand Doll PP-1000" and "PP-20005" which are manufactured by DIC Corporation.

With respect to the pigments used in the present invention, from the viewpoint of excellent durability, weather resistance, and design properties, inorganic oxide such as titanium oxide and zinc oxide is preferably used as the white pigment, and carbon black is preferably used as the black pigment.

The mass ratio of the pigments used in the present invention is set to be 1 to 400 parts by mass with respect to 100 parts by mass of the resin components, and is preferably set to be 10 to 300 parts by mass from the viewpoint of an excellent adhesion property, an excellent anti-blocking property, or the like.

If necessary, additives other than the above-described substances may be contained in the adhesive composition of the present invention. As the additive, additives and the like which are generally used in a resin composition for forming a film or a coated film are exemplified. Examples of the additive include a leveling agent; inorganic fine particles of colloidal silica, alumina sol, or the like; polymethyl methacrylate-based organic fine particles; an anti-foaming agent; sagging inhibitor; a wetting and dispersing agent; a silane coupling agent; a viscosity modifier; a ultraviolet absorber; a metal deactivator; a peroxide decomposition agent; a flame retardant; a reinforcing agent; a plasticizer; a lubricant; a rust inhibitor; a fluorescent whitening agent; an inorganic heat-absorbing agent; a flameproofing agent; an antistatic agent; and a dehydrating agent.

For example, in the case where a polyol mixture which contains the polyol (C) and the alicyclic amide compound (B) as the essential components is used, a premix obtained by mixing components other than the polyisocyanate (A) with each other in advance is prepared as the polyol mixture, the prepared premix and the polyisocyanate (A) are mixed to thereby obtain an adhesive of the present invention.

A laminating method of the present invention includes coating a base material with the adhesive in a gravure coater, a die coater, or a lip coater, and, after being dried, laminating the other base material on the coated base material. With respect to the die coater and the lip coater can, the width of the coated portion can be freely adjusted by using a deckle attached to both ends of a die portion or a lip portion. In the case where a volatile acidic compound is used, as the acidic compound is volatilized, the adhesive becomes a gel. For the reason, the pH of the acidic compound is required to be continuously maintained to be from 1 to 8, preferably from 3 to 7.

The coating amount of the adhesive is approximately from 0.5 to 6.0 g/m², and preferably from 1.0 to 4.0 g/m².

In the case where the adhesive composition according to the present invention is used, after laminating, the adhesive is cured at a normal temperature or under heating for 6 to 24 hours, so that practical physical properties are exhibited.

### Examples

Details and effects of the present invention will be described below in more detail by using examples. In the examples, "a part" refers to "a part by mass". A polyol raw material used as the raw material in each of the examples and comparative examples is described below.

### [Polyol raw material]

Polyester polyol (c1):reaction product (hydroxyl value: 50) of ethylene glycol, diethylene glycol, isophthalic acid, and adipic acid
Polyether polyol (c2): polypropylene glycol (hydroxyl value: 112)
Polyether polyol (c3): polypropylene glycol (hydroxyl value: 280)

### Example 1 [Production of polyisocyanate mixture (X-1)]

10 parts by mass of diphenylmethane diisocyanate (MDI) was added to 60 parts by mass of the polyester polyol (c1), and the reaction was performed while maintaining the temperature of the mixture at 60°C. Then, 29 parts by mass of ethyl acetate was put thereinto to thereby obtain a resin solution of polyester polyisocyanate (A-1) having an isocyanate group at the terminal thereof. Then, the obtained resin solution was cooled and when the temperature of the resin solution becomes lower than 50°C, 1 part by mass of ε-caprolactam was added. Thus, 100 parts by mass of a polyester polyisocyanate mixture (X-1) having an isocyanate group at the terminal thereof were prepared. Evaluation for storage stability was performed by using the following method. The results are shown in Table 1.

### (Evaluation for storage stability)

Viscosity just after the mixture was prepared, and viscosity after being left to stand at 60°C for 10 days were measured by a B-type viscometer, and the measured viscosity was evaluated from a ratio of the increased viscosity, based on the following criteria.
A: from one time to less than 1.1 times
B: from 1.1 times to less than 1.5 times
C: equal to or greater than 1.5 times

### Example 2 [Production of polyisocyanate mixture (X-2)]

10 parts by mass of diphenylmethane diisocyanate (MDI) was added to 59 parts by mass of the polyester polyol (c1), and the reaction was performed while maintaining the temperature of the mixture at 60°C. Then, 29 parts by mass of ethyl acetate was put thereinto to thereby obtain a resin solution of polyester polyisocyanate (A-2) having an isocyanate group at the terminal thereof. Then, the obtained resin solution was cooled and when the temperature of the resin solution becomes lower than 50°C, 2 parts by mass of ε-caprolactam was added. Thus, 100 parts by mass of a polyester polyisocyanate mixture (X-2) were prepared. Evaluation for storage stability was performed in the same manner as in Example 1. The results are shown in Table 1.

### Example 3 [Production of polyisocyanate mixture (X-3)]

24.5 parts by mass of the polyether polyol (c2) and 19.5 parts by mass of the polyether polyol (c3) were mixed, and 55 parts by mass of diphenylmethane diisocyanate (MDI) were added so as to cause a reaction thereof while maintaining a temperature of 60°C. Thus, a resin solution of polyether polyisocyanate (A-3) was obtained.

Then, the obtained resin solution was cooled and when the temperature of the resin solution becomes lower than 50°C, 1 part by mass of ε-caprolactam was added. Thus, 100 parts by mass of a polyisocyanate mixture (X-3) having an isocyanate group at the terminal thereof were prepared. Evaluation for storage stability was performed in the same manner as in Example 1. The results are shown in Table 1.

### Example 4 [Production of polyisocyanate mixture (X-4)]

24 parts by mass of the polyether polyol (c2) and 19 parts by mass of the polyether polyol (c3) were mixed, and 55 parts by mass of diphenylmethane diisocyanate (MDI) were added, and the reaction was performed while maintaining the temperature of the mixture at 60°C. Thus, polyether polyisocyanate (A-4) having an isocyanate group at the terminal thereof was obtained.

Then, a reaction solution obtained from the polyether polyisocyanate (A-4) was cooled and when the temperature of the resin solution becomes lower than 50°C, 2 parts by mass of ε-caprolactam were added. Thus, 100 parts by mass of a polyether polyisocyanate mixture (X-4) were prepared. Evaluation for storage stability was performed in the same manner as in Example 1. The results are shown in Table 1.

### Example 5 [preparation of polyol mixture (Y-1)]

49 parts by mass of the polyether polyol (c2) and 1 part by mass of ε-caprolactam were mixed to thereby obtain a polyol mixture (Y-1). Evaluation for storage stability was performed in the same manner as in Example 1. The results are shown in Table 2.

### Example 6 [preparation of polyol mixture (Y-2)]

48 parts by mass of the polyether polyol (c2) and 2 parts by mass of ε-caprolactam were mixed to thereby obtain a polyol mixture (Y-2). Evaluation for storage stability was performed in the same manner as in Example 1. The results are shown in Table 2.

### Production Example 1 [Production of polyisocyanate resin solution (X-5)]

10 parts by mass of diphenylmethane diisocyanate (MDI) were added to 61 parts by mass of the polyester polyol (c1), and the reaction was performed while maintaining the temperature of the mixture at 60°C. Then, 29 parts by mass of ethyl acetate were put thereinto.

Then, the reaction solution was cooled to thereby obtain 100 parts by mass of a resin solution (polyisocyanate resin solution (X-5)) of polyester polyisocyanate (A-5) having an isocyanate group at the terminal thereof. Evaluation for storage stability was performed in the same manner as in Example 1. The results are shown in Table 1.

### Production Example 2 [Production of polyisocyanate (A-6)]

25 parts by mass of the polyether polyol (c2) and 20 parts by mass of the polyether polyol (c3) were mixed, and 55 parts by mass of diphenylmethane diisocyanate (MDI) were added, and the reaction was performed while maintaining the temperature of the mixture at 60°C. Thus, polyether polyisocyanate (A-6) having an isocyanate group at the terminal thereof was obtained.

**[Table 1]**

| Table 1 Preparation of polyisocyanate mixture | | | Examples | | | | Production Examples | |
|---|---|---|---|---|---|---|---|---|
| | | | 1 | 2 | 3 | 4 | 1 | 2 |
| | | | Mixture X-1 | Mixture X-2 | Mixture X-3 | Mixture X-4 | Solution X-5 | Synthesis of A-6 |
| | Polyisocyanate A-1 | | 70 | | | | | |
| | Polyisocyanate A-2 | | | 69 | | | | |
| | Polyisocyanate A-3 | | | | 99 | | | |
| | Polyisocyanate A-4 | | | | | 98 | | |
| | Polyisocyanate A-5 | | | | | | 71 | |
| Composition of mixture | Polyisocyanate A-6 | | | | | | | 100 |
| | Polyisocyanate raw material | Polyester polyol (c1) | 60 | 59 | 0 | 0 | 61 | 0 |
| | | Polyether polyol (c2) | 0 | 0 | 24.5 | 24 | 0 | 25 |
| | | Polyether polyol (c3) | 0 | 0 | 19.5 | 19 | 0 | 20 |
| | | MDI | 10 | 10 | 55 | 55 | 10 | 55 |
| | ε-caprolactam | | 1 | 2 | 1 | 2 | 0 | 0 |
| | Ethyl acetate | | 29 | 29 | 0 | 0 | 29 | 0 |
| Evaluation | Storage stability | | B | B | B | B | A | A |

**[Table 2]**

| Table 2 Preparation of polyol mixture | | Examples | |
|---|---|---|---|
| | | 5 | 6 |
| | | Mixture Y-1 | Mixture Y-2 |
| Composition of mixture | Polyether polyol (c2) | 49 | 48 |
| | ε-caprolactam | 1 | 2 |
| Evaluation | Storage stability | A | A |

### Example 7

100 parts by mass of the mixture (X-1) obtained in Example 1 and 50 parts by mass of the polyether polyol (c2) were mixed to thereby obtain a solvent type adhesive.

### (Evaluation of PAA elution amount)

A PET film was coated with this adhesive and a CPP (unstretched polypropylene) was bonded to the surface coated with the adhesive to thereby obtain a composite film. The obtained composite film was cured through aging for several days. The PAA elution amount was analyzed as follows, by using composite films which were respectively obtained in cases of aging for one hour, for one day, for three days, and for seven days.

Pouches (200 cm²) were prepared by using the composite films. These pouches were filled with a 3% aqueous acetic acid solution and sealed. Then, a sterilization treatment was performed at 121°C for 30 minutes. The aqueous acetic acid solution was taken out, and quantitative measurement for aromatic amines (PAA) was performed by liquid chromatograph/mass analysis. Conversion from a measured value was performed and the PAA elution amount (µg/Kg-food) for each aging period of time was calculated. The results are shown in Table 3.

### (Evaluation of pot life)

Viscosity just after the adhesive was obtained was measured by using a Zahn cup viscometer (25°C). Then, viscosity after the adhesive was left to stand at 40°C for 6 hours, and after the adhesive was left to stand at 25°C for 18 hours was measured by using the Zahn cup viscometer (25°C). Evaluation was performed based on a ratio of the increased viscosity at that time, by using the following criteria. The results are shown in Table 3.
A: from one time to less than 1.5 times
B: from 1.5 times to less than 2 times
C: equal to or greater than 2 times

### Example 8

100 parts by mass of the mixture (X-2) obtained in Example 2 and 50 parts by mass of the polyether polyol (c2) were mixed, and thereby a solvent type adhesive was obtained.

Then, the PAA elution amount and the pot life were evaluated in the same manner as in Example 7. The results are shown in Table 3.

### Example 9

100 parts by mass of the polyisocyanate resin solution (X-5) and 50 parts by mass of the polyol mixture (Y-1) were mixed to thereby obtain a solvent type adhesive.

Then, the PAA elution amount and the pot life were evaluated in the same manner as in Example 7. The results are shown in Table 3.

### Example 10

100 parts by mass of the polyisocyanate resin solution (X-5) and 50 parts by mass of the polyol mixture (Y-2) were mixed to thereby obtain a solvent type adhesive.

Then, the PAA elution amount and the pot life were evaluated in the same manner as in Example 7. The results are shown in Table 3.

### Example 11

100 parts by mass of the polyisocyanate solution (X-5), 46 parts by mass of the polyether polyol (c2), 2 parts by mass of ε-caprolactam, and 2 parts by mass of ethyl acetate were mixed to thereby obtain a solvent type adhesive.

Then, the PAA elution amount and the pot life were evaluated in the same manner as in Example 7. The results are shown in Table 3.

### Example 12

100 parts by mass of the polyisocyanate mixture (X-3) obtained in Example 3 and 50 parts by mass of the polyether polyol (c2) were mixed to thereby obtain a solventless adhesive.

Then, the PAA elution amount was evaluated in the same manner as in Example 7. The results are shown in Table 3.

### (Evaluation of pot life)

The obtained adhesive was measured at 40°C for 30 minutes by using an E-type viscometer, and evaluation was performed based on a ratio of the increased viscosity, by using the following criteria.
A: from one time to less than 3 times
B: from 3 times to less than 5 times
C: equal to or greater than 5 times

### Example 13

100 parts by mass of the polyisocyanate mixture (X-4) obtained in Example 4 and 50 parts by mass of the polyether polyol (c2) were mixed to thereby obtain a solventless adhesive.

Then, the PAA elution amount and the pot life were evaluated in the same manner as in Example 12. The results are shown in Table 3.

### Example 14

100 parts by mass of the polyisocyanate (A-6) and 50 parts by mass of the polyol mixture (Y-1) were mixed to thereby obtain a solventless adhesive. Then, the PAA elution amount and the pot life were evaluated in the same manner as in Example 7. The results are shown in Table 3.

### Example 15

100 parts by mass of the polyisocyanate (A-6) and 50 parts by mass of the polyol mixture (Y-2) were mixed to thereby obtain a solventless adhesive.

Then, the PAA elution amount and the pot life were evaluated in the same manner as in Example 12. The results are shown in Table 3.

### Example 16

100 parts by mass of the polyisocyanate (A-6), 46 parts by mass of the polyether polyol (c2), 2 parts by mass of ε-caprolactam, and 2 parts by mass of ethyl acetate were mixed to thereby obtain a solventless adhesive. Then, the PAA elution amount and the pot life were evaluated in the same manner as in Example 12. The results are shown in Table 3.

### Comparative Example 1

100 parts by mass of the polyisocyanate solution (X-5) and 50 parts by mass of the polyether polyol (c2) were mixed to thereby obtain a solvent type adhesive.

Then, the PAA elution amount and the pot life were evaluated in the same manner as in Example 7. The results are shown in Table 3.

### Comparative Example 2

100 parts by mass of the polyisocyanate (A-6) and 50 parts by mass of the polyether polyol (c2) were mixed to thereby obtain a solventless adhesive.

Then, the PAA elution amount and the pot life were evaluated in the same manner as in Example 12. The results are shown in Table 3.

### Comparative Example 3

100 parts of the polyisocyanate (A-6), 48 parts by mass of the polyether polyol (c2), and 2 parts by mass of 5-(2,5-di-oxotetrahydrofuryl)-3-methyl-3-cyclohexene-1,2-d icarboxylic acid anhydride as a PAA supplementary agent were mixed to thereby obtain a solventless adhesive. Then, the PAA elution amount and the pot life were evaluated in the same manner as in Example 12. The results are shown in Table 3.

**[Table 3]**

| Table 3 | | Examples | | | | | | | | | | Comparative Examples | | |
|---|---|---|---|---|---|---|---|---|---|---|---|---|---|---|
| | | 7 | 8 | 9 | 10 | 11 | 12 | 13 | 14 | 15 | 16 | 1 | 2 | 3 |
| Isocyanate component | Mixture X-1 | 100 | | | | | | | | | | | | |
| | Mixture X-2 | | 100 | | | | | | | | | | | |
| | Mixture X-3 | | | | | | 100 | | | | | | | |
| | Mixture X-4 | | | | | | | 100 | | | | | | |
| | Resin solution X-5 | | | 100 | 100 | 100 | | | | | | 100 | | |
| | Polyisocyanate A-6 | | | | | | | | 100 | 100 | 100 | | 100 | 100 |
| Polyol component | Polyol mixture Y-1 | | | 50 | | | | | 50 | | | | | |
| | Polyol mixture Y-2 | | | | 50 | | | | | 50 | | | | |
| | Polyether polyol (c2) | 50 | 50 | | | 46 | 50 | 50 | | | 46 | 50 | 50 | 48 |
| Alicyclic amide compound for post-addition | ε-caprolactam | | | | | 2 | | | | | 2 | | | |
| | Ethyl acetate | | | | | 2 | | | | | 2 | | | |
| Ethyl acetate | | 50 | 50 | 50 | 50 | 50 | 50 | 50 | 50 | 50 | 50 | 50 | 50 | 50 |
| PPA supplementary agent | | | | | | | | | | | | | | 2 |
| PAA elution amount (µg/Kg-food) | After one hour of aging | 23.1 | 15.0 | 16.2 | 12.3 | 12.5 | 55.5 | 32.3 | 45.1 | 34 | 35.2 | 235.1 | 554.7 | 560.2 |
| | After 24 hours of aging | 9.8 | 7.7 | 9.0 | 7.2 | 7.6 | 10.1 | 8.4 | 9.8 | 7.9 | 8.1 | 66.2 | 178.3 | 182.3 |
| | After 72 hours of aging | 5.6 | 3.4 | 4.5 | 4.1 | 4.3 | 5.9 | 4.1 | 5.6 | 4.6 | 4.5 | 19.2 | 77.7 | 82.5 |
| | After 168 hours of aging | 3.3 | 2.1 | 3.2 | 2.8 | 2.7 | 4.4 | 3.7 | 4.8 | 3.1 | 3.4 | 11.3 | 25.4 | 32.9 |
| Pot life | | A | A | A | A | A | A | A | A | A | A | A | A | A |

## Claims

1. A polyisocyanate mixture comprising polyisocyanate (A) and an alicyclic amide compound (B) as essential components.

2. The polyisocyanate mixture according to Claim 1,
wherein the polyisocyanate (A) is obtained by causing polyol (C) and a polyvalent isocyanate compound to react with each other.

3. The polyisocyanate mixture according to Claim 2,
wherein the polyol (C) is polyester polyol or polyether polyol.

4. The polyisocyanate mixture according to Claim 1,
wherein the cyclic amide compound (B) is one or more compounds selected from the group consisting of δ-valerolactam, ε-caprolactam, ω-enantholactam, η-capryllactam, and β-propiolactam.

5. The polyisocyanate mixture according to Claim 1,
comprising the alicyclic amide compound (B) in an amount of 0.1 to 10 parts by mass per 100 parts by mass of the polyisocyanate (A).

6. A polyol mixture comprising polyol (C) and an alicyclic amide compound (B) as essential components.

7. The polyol mixture according to Claim 6,
wherein the cyclic amide compound (B) is one or more compounds selected from the group consisting of δ-valerolactam, ε-caprolactam, ω-enantholactam, η-capryllactam, and β-propiolactam.

8. The polyol mixture according to Claim 7,
comprising the alicyclic amide compound (B) in an amount of 0.1 to 10 parts by mass per 100 parts by mass of the polyol (C).

9. An adhesive comprising polyisocyanate (A), an alicyclic amide compound (B), and polyol (C) as essential components.

10. The adhesive according to Claim 9,
in which a polyisocyanate mixture (X), which is prepared by mixing the polyisocyanate (A) and the alicyclic amide compound (B) in advance, and the polyol (C) are used.

11. The adhesive according to Claim 10,
wherein the polyisocyanate mixture (X) is the polyisocyanate mixture according to any one of Claims 1 to 5.

12. The adhesive according to Claim 11,
wherein, with respect to a ratio of the polyisocyanate mixture (X) and the polyol (C) to be used, an equivalent ratio [isocyanate group/hydroxyl group] of an isocyanate group in the polyisocyanate mixture (X) and a hydroxyl group in the polyol (C) is from 1.0 to 5.0.

13. The adhesive according to Claim 9,
in which a polyol mixture (Y), which is prepared by mixing the polyol (C) and the alicyclic amide compound (B) in advance, and the polyisocyanate (A) are used.

14. The adhesive according to Claim 13,
wherein the polyol mixture (Y) is the polyol mixture according to any one of Claims 6 to 8.

15. The adhesive according to Claim 14,
wherein, with respect to a ratio of the polyol mixture (Y) and the polyisocyanate (A) to be used, an equivalent ratio [isocyanate group/hydroxyl group] of a hydroxyl group in the polyol mixture (Y) and an isocyanate group in the polyol resin (A) is from 1.0 to 5.0.

16. A laminated film prepared by coating a first plastic film with the adhesive according to Claim 9 to form an adhesive layer, subsequently laminating a second plastic film on the coated surface, and curing the adhesive layer.
